# EUROPEAN PATENT SPECIFICATION

(11) **EP 1 059 809 B1**
(45) Date of publication and mention of the grant of the patent: **31.05.2006**
(21) Application number: 00660105.8
(22) Date of filing: 02.06.2000
(51) Int. Cl.: H04N 5/445

(54) **Adaptor for data transfer between a mobile device and a television and method therefore**
Adapter und Verfahren zur Datenübertragung zwischen einer mobilen Vorrichtung und einem Fernsehapparat
Adaptateur permettant le transfert de données entre un appareil mobile et une télévision et procédé associé

(30) Priority: 07.06.1999 FI 991299
(43) Date of publication of application: 13.12.2000
(60) Divisional application: 05028779.6
(73) Proprietor: Nokia Corporation, 02150 Espoo (FI)
(72) Inventor: Ikonen, Ari, 21280 Raisio (FI); Heinonen, Pekka, 02100 Espoo (FI); Okkonen, Harri, Mountain View, CA 94040 (US)
(74) Representative: Lamberg, Samu Petteri

(56) References cited:
- EP-A- 0 710 017
- DE-A- 19 707 908
- US-A- 5 748 238

## Description

The present invention relates to connecting an external audio-visual device to a second device, especially connecting a TV-device to another device.

When designing a mobile station, one should on one hand minimise the size of the device so that it would be as portable as possible, and on the other hand build a display as large as possible in order to be able to present information on the mobile station as well as possible. There have been plans to use future mobile stations like computers to browse the Internet and even to transmit moving picture. The mobile station's own display unit, small because of demands of portability, is not always the best possible. It is also possible to receive high-quality audio signal, even music, with advanced mobile stations. The small speaker of a mobile station can be somewhat restricted for this purpose, especially if there are several listeners. The ability of a mobile station to store received AV-information is also very restricted. Nonetheless, In some situations it would be preferable to be able to store information received via a mobile station without being restricted to the data storage capacity of the mobile station.

The patent application publication EP 804012 A2 presents a method, where a mobile station can be used for transferring the identification data of a subscriber of pay-per-view information for their television to the sender of the information. In order to deliver pay-per-view information it is essential to be able to reliably identify the subscriber of the information and a feedback provided by a mobile station offers a cheap means. The mobile station's own PIN-code can be used to identify the subscriber. However, in order to be able to use the method, a connection must be constructed between the mobile station and the television. Such a connection may require special adaptation of the television devices for them to function with a mobile station. Such an adaptation would cause additional cost and compatibility problems between devices manufactured by different manufacturers. Additionally, a connection to a television by a cable requires a cable to be connected both to the mobile station and the television prior to using the method. In this case the user must leave the mobile station connected to the television at least for a while and the mobile station may easily be forgotten in place when the user leaves the television set. In worst case such a situation may offer a chance of abuse for a third party, if the connection is forgotten open.

US 5,748,238-A discloses a video camera with a VTR for recording/playback of images which communicated with a camera/VTR station connected to a television by means of an opto-electronic link.

EP0710017A2 discloses a specially adapted broadcast TV set comprising an additional receiver to receive data from a portable computer and display on the TV. The additional receiver may be a modification of an existing IR remote-control receiver. The TV set may also comprise a transmitter to establish a two-way link and provide processing and storage facilities for the computer.

WO 98/26389 discloses an intrusion warning and protection system with a television device for isolated houses, apartment blocks and business premises generally, comprising one or more electronic units, remote transmitting, supplied with microtelecameras, placed in the internal and external areas to be guarded, whether associated or not to various services such as street lamps, light bulbs, street buzzer panels, and a receiving electronic unit connected to the screen of a television set or of a computer or to a video recorder and the like, each remote unit automatically transmitting the image of a person, who passes within the range of operation of the telecamera, to the local unit that transfers it to the screens or to a video cassette of the video recorder where the images that may be present on the screens or that are being recorded, are replaced by the image of said person, said apparatuses being turned on for the purpose if turned off at the time of need. The local unit is shown to connect via a cable to a TV and it may connect with radio to the remote units.

Now an adapter has been invented, by means of which an external device, e.g. a mobile station can be connected to a television device in such a way that the television device can be used as a display of the external device.

According to a first aspect of the invention, there is provided a coupling device as set out in claim 1.

According to a second aspect of the invention, there is provided a system as set out in claim 12.

According to a third aspect of the invention, there is provided a method for coupling an external device to a television device as set out in claim 14.

Said external device can be e.g. a mobile station, an electronic game, a PDA-device, a portable computer or a video camera.

A TV-device in this context denotes a device capable of receiving a TV-signal, such as a television receiver, a TV-projector (a device to project TV-image on a screen) and a video recorder.

An advantage of the present invention is that an external device, e.g. a mobile station, can be coupled to a television device using the open LPRF-standard, in which case the coupling can be done easily independently of the make and model of the external device and the television device by using an easily portable adapter, which can quickly be installed by an ordinary consumer. Due to the characteristics of radio waves, the coupling is also insusceptible to minor obstacles and will function even if there is no line of sight between the external device and the adapter, e.g. when the adapter is behind the television device. Preferably the adapter has been arranged to use a SCART-connector and the fast blanking -function characteristic thereto, which function enables the adapter, when receiving information from an external device, to automatically force the television device to present the information supplied by the adapter. The adapter can also be used to receive information from the television device to an external device. E.g. commercials or other information can be received from text television to the external device. The text television information is already in digital form. As an advantage of the LPRF-link such an information transfer connection can easily be arranged for e.g. a mobile station, because when the user is near the television device, his/her personal mobile station is also near the television device. An LPRF-link allows communication between an external device and a television device even if they have not been connected with wires and they do not have a direct line of sight or a proper reflection e.g. off a wall. The user can also e.g. keep his/her mobile station on belt attached to a belt clip, in which case the mobile station is in no danger of being left behind when the user leaves the place later.

Preferably the adapter has also been arranged to comprise a connector to external program source, such as a VCR and/or a video camera, in order to make the adapter transparent to the television device attached to it and to allow the television device use an external program source normally. In an embodiment of the present invention the adapter has been arranged to also comprise an infrared port to allow e.g. a portable computer or a video camera conforming to the IrDA (Infrared Data Association)-standard to be connected to a television device.

In a second embodiment of the present invention the adapter comprises means for adding or mixing information to a TV-image being presented simultaneously, e.g. similarily to text television's mix function.

In a third embodiment of the present invention the adapter has been integrated to a charging device of an external device (e.g. a mobile station), in which case the user only has to carry with him/her the external device and the charging device in order to be able to use a TV-device as an AV-terminal of the external device.

The invention is explained in the following in detail by referring to the enclosed drawings and by using a mobile station as an example of an external device, where
- figure 1: is a diagram of a system according to the invention;
- figure 2: is a diagram of data transfer in a system according to the invention;
- figure 3: is a block diagram of the structure of an LPRF-link module according to the invention to be connected to a SCART-connector;
- figure 4: is a block diagram of the structure of an LPRF-link module according to the invention to be connected to an antenna connector;
- figure 5: is a block diagram of the structure of a combined LPRF-link module and mobile station charging device according to a third implementation of the invention.

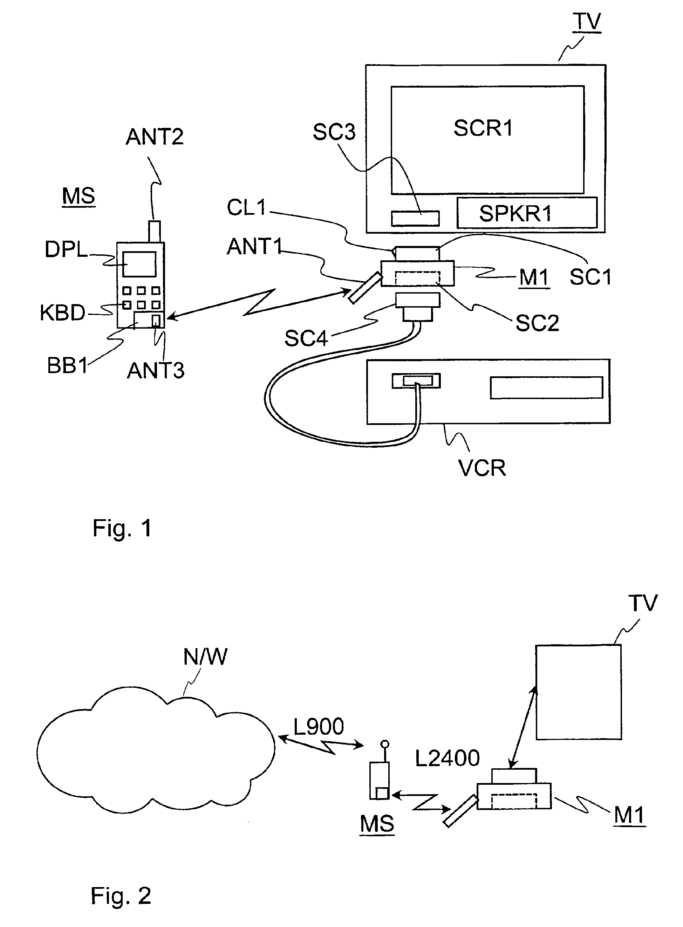

Figure 1 presents a system according to the invention comprising a mobile station MS, a television receiver TV, a video cassette recorder VCR and an adapter or link module M1. The TV and the VCR of the system are ordinary devices known from prior art. Here a link module M1, which can be used for coupling a mobile station to a television device through an LPRF-link, has been coupled between a TV and a VCR coupled together by means of a SCART connection. The link module comprises a first SCART output SC1 and a first SCART input SC2. The TV comprises a second SCART input SC3 and the VCR comprises a second SCART output SC4. Preferably, but not necessarily, the link module also comprises a flexible extension CL1 to fasten releasably to said second SCART input SC3. Alternatively a friction joint can be used to fasten the link module by manufacturing the first SCART output to fit snugly to the second SCART input. The link module is coupled to the television receiver though the second SCART input using the first SCART output. The purpose of the first SCART input is to enable the use of an external AV device, such as a video cassette recorder VCR with the TV by sharing SC3 with the VCR. Thus the user does not have to release the link module and connect the second SCART output of the VCR in the place of the link module in order to be able to view e.g. video image. The link module comprises an antenna ANT1 which enables it to communicate with the mobile station MS. The antenna has been drawn to protrude from the module, but preferably it is integrated inside the module M1. The mobile station is a mobile station, preferably a digital mobile station, such as a GSM-phone, with LPRF connecting means. The mobile station comprises a display DPL, a keyboard KBD and an antenna ANT2 along with an LPRF-part BB, which comprises an LPRF-antenna ANT3, which the mobile station uses to send information, e.g. text and/or graphics to be presented on the TV's screen, to the link module over an LPRF-link. Preferably the LPRF antenna ANT3 has been integrated inside the mobile station. Instead of a TV the mobile station can be connected e.g. to a TV-projector or a video cassette recorder by means of the link module. Especially in this way it is possible to store several hours of image and/or sound received on a mobile station.

Figure 2 is a diagram of data transfer in a system according to the invention. The system comprises a data transfer network N/W, with which the mobile station MS communicates e.g. through the base stations using the radio link L900, e.g. on the frequency band of about 900 MHz or 1800 MHz. The mobile station communicates with the link module on an LPRF link frequency, which may be e.g. 2400 MHz. The link module M1 in its turn has been coupled to the television through its SCART connector and it transfers information to the TV through the SCART connector.

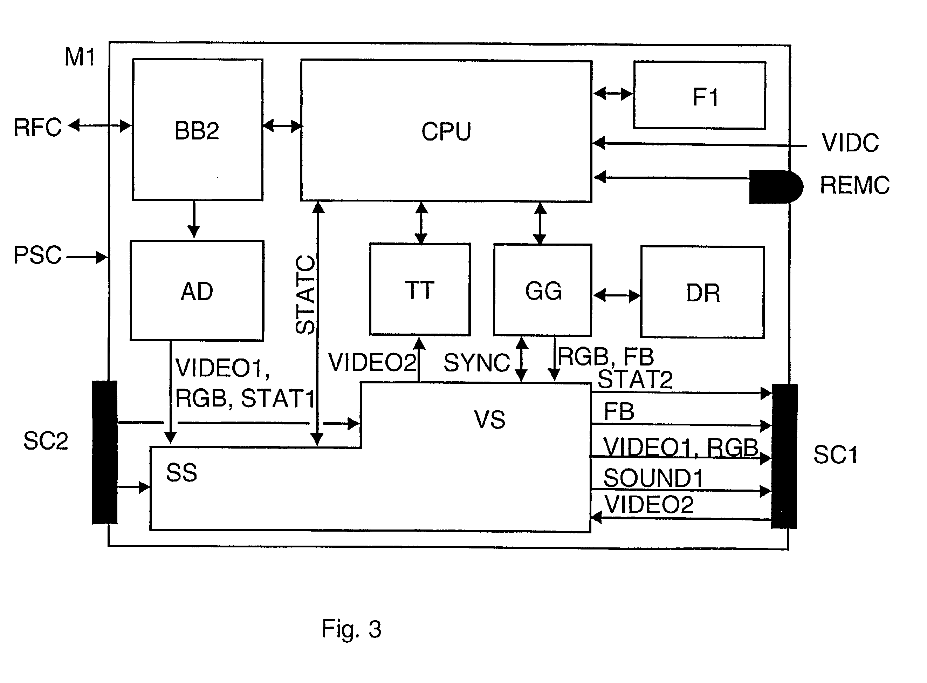

Figure 3 is a block diagram of a structure of a link module according to the invention to be attached to a SCART connector. The link module comprises a central processing unit CPU, which controls the operation of the link module. The link module comprises a first SCART connector SC1 to supply audio and video information to the television device and preferably, but not necessarily, a second SCART connector SC2 to receive external audio and video information. Naturally, the link module also comprises an LPRF radio block BB2, which in this example is a Bluetooth-standard compliant block for communication with an LPRF connection RFC. The block BB2 is controlled by CPU. The CPU operating instructions i.e. the program has preferably been stored in a Flash-memory F1, where the CPU can read them and which may optionally be used to store configuration data. Optionally the link module may also comprise in connection with the central processing unit an infrared port REMC to receive remote control or information relayed on IR. To adapt the text and/or graphics received by the link module to an RGB-signal the link module comprises a graphics generator GG, which, using the display memory DR, constructs the information relayed by the processor to RGB format. In order to bypass and re-establish the connection of the received SCART connector the link module comprises a sound switch SS, which is controlled by block AD (Audio Decoder), which functions as a decoder for the audio signal received over the LPRF-link. AD enables the audio data to be decoded as late as in the link module, but alternatively AD can be omitted, in which case MS must transfer the audio signal to the module in an already decoded form. When receiving sound, e.g. speech, from the mobile station over the LPRF link, which sound is desired to be played through the speakers of the television device, the sound switch, controlled by a signal STATC sent by the CPU, disconnects the external audio connector SC2 from SC1 and connects AD in place of SC2 to transmit an audio signal (e.g. speec, music or warning or game sounds produced by the mobile station) to the television device through SC1. Similarly the link module comprises a video switch VS which disconnects the video connection of SC2 from SC1 and connects GG to SC1, when GG issues a disconnecting command to VS. In this case GG gives an RGB-signal to SC1 through the video switch and an RGB synchro signal SYNC to video signal VIDEO1. The sound signal SS relays the sound signal SOUND1 to SC1. If SC2 receives a first status signal STAT1 signalling the entry of an external SCART signal from e.g. a video cassette recorder, VS preferably relays a second status signal STAT2 corresponding to the first status signal STAT1 to SC1, if the TV device is not required to present or store information provided by the mobile station. To replay the image sent by a mobile station connected to a TV device the switch preferably uses a fast blanking signal FB commonly used in SCART connections to force the TV device to display the image. A fast blank signal is an increase of voltage in the pin 8 (status control) of a SCART connector to over 2,5 volts. Preferably the video switch has been arranged to receive a video signal VIDEO2 (e.g. a composite signal) of a tuned channel from the reception circuits of the TV device and to relay syncro information from VIDEO2 to the graphics generator GG. Preferably the link module also comprises a text-TV block TT connected to VS and CPU. TT receives from VS a VIDEO2 signal and separates digital information from VIDEO2 for the CPU to be relayed over BB2 and RFC to MS.

The effect of the fast blank signal is indeed fast and it can be used to mix an RGB-signal into a TV picture e.g. to add a small message "You have a message" to the top edge of the picture. In this case VS gives a sync SYNC to the graphics generator GG and the GG is synchronised to the video of the incoming TV video signal, at which point a video synched RGB is added to the RGB-signal of the TV picture. If the TV video signal is received from e.g. a VCR on SC2, an RGB signal generated by GG and corresponding to the picture to be added to the TV picture is added to the RGB signal supplied by the VCR. Thus when the TV device has been tuned to a channel corresponding to the VCR, VIDEO2 will relay a sync of the video signal of the VCR, VIDEO1, to GG through VS, and GG synchronises an RGB signal generated by GG to be added to the RGB signal received from SC2. Then GG gives a synchronised RGB signal to VS, which combines the RGB generated by GG with the RGB received from SC2 and gives the combined RGB to SC1. The link module preferably also comprises a video camera input VIDC to couple a video camera to the link module. The link module can be arranged to be controlled (e.g. switched on or off) by an external remote control unit using infrared rays or alternatively its control can be realised with an LPRF connection using a mobile station. The link module comprises an internal power source (a battery) or a connector PSC to an external power source in order to receive the energy needed for its operation.

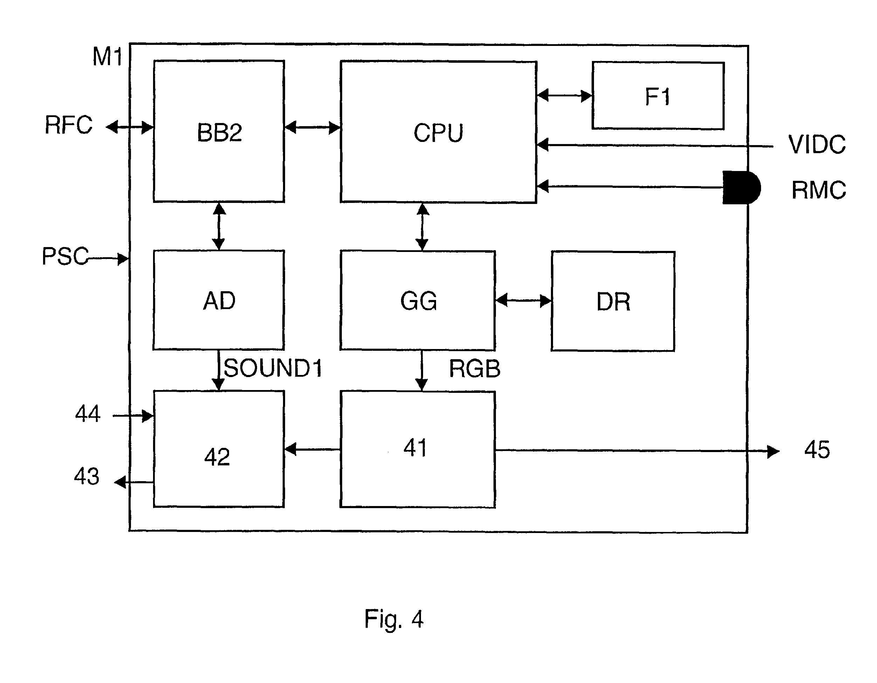

Figure 4 is a diagram of the structure on an LPRF link module according to the invention to be connected to an antenna connector, which diagram shows the parts relevant to explaining the present invention. The structure of the module is otherwise similar to that of the link module presented in figure 3, but here the pattern coming from the graphics generator is coded to a TV signal with a suitable coding (e.g. PAL, SECAM or NTSC) in block 41. The coded video signal is supplied to an RF modulator to block 42, where an eventual signal SOUND1 from the audio decoder AD is combined with it. Preferably the RF modulator relays as is the antenna signal received in the antenna connection to the television device, but reserves one channel to present information coming from a mobile station at least at those times, when it is receiving a coded video signal.

Both the link module in figure 3 and the one in figure 4 can be arranged to use e.g. a voltage connection of 3.3 V or 5 V. The power supply of the link module PSC can be arranged e.g. by a battery or mains device attached to the link module.

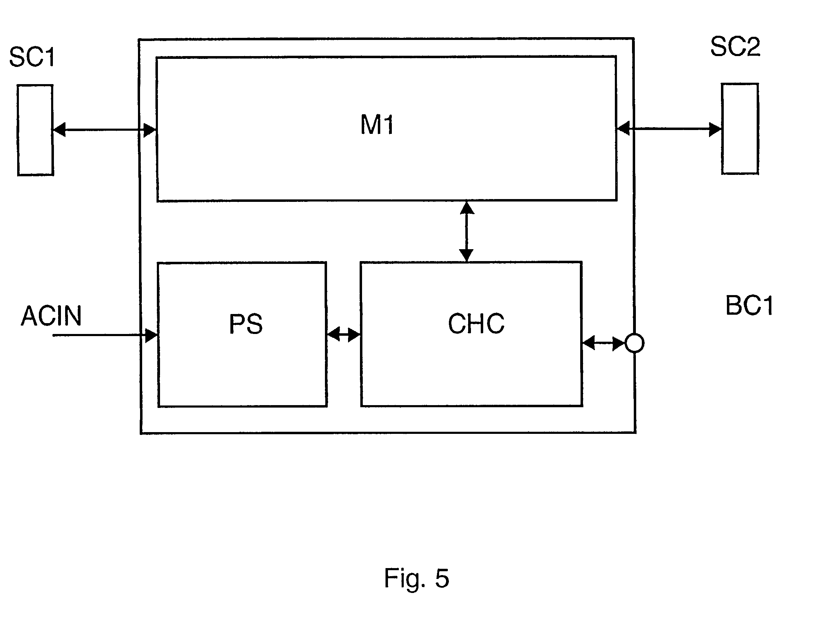

Figure 5 presents the structure of a combined LPRF link module and mobile station charging device according to the present invention. The device comprises a link module M1, e.g. the one presented in figure 3, a power supply PS (e.g. a transformer or a voltage converter) and a charging control block CHC. The SCART connectors SC1 and SC2 of M1 have preferably been arranged to the ends of flexible cables, so that the device may be placed e.g. on a TV. PS comprises an input ACIN for mains voltage and CHC comprises an output BC1 for a mobile station battery or a mobile station. When the device is coupled e.g. between a TV and a video cassette recorder, the device receives its operating voltage from the mains network converted by PS. CHC controls the charging of a mobile station battery attached to the device when needed. Preferably, though not necessarily, the device can be arranged to receive its operating voltage from a mobile station battery connected to the device through BC1, in which case the device can be operated also then, when there are no free mains sockets in the vicinity of the TV device. Also preferably, but not necessarily, the device comprises a power saving technology to turn off the unnecessary functions of the link module, until they are activated e.g. on the arrival of an excitation from the mobile station through the LPRF link. Thus the operating period of the device can be extended and an extended functioning period is made possible when the device is operated on a battery and not with mains voltage.

This has been a presentation of the implementation and embodiments of the present invention by aid of examples. It is obvious to a man skilled in the art that the present invention is not limited to the details of the embodiments presented above and that the present invention can be realised in another form without deviating from the characteristics of the present invention. The presented embodiments should be considered illuminatory and not restrictive. Thus the implementation and use possibilities of the present invention are indeed restricted only by the enclosed patent claims. E.g. the power saving technology described above can also be applied to the link modules in figures 3 and 4. Correspondingly, instead of LPRF, where the radio signal is 2,4 GHz and the range is about 10 m, a WLAN (Wireless Local Area Network) connection can be used, which connection is another short range radio connection with a range of as much as 100 m. Thus different implementation alternatives defined by the claims, also equivalent implementations belong to the area of the present invention.

## Claims

1. A coupling device (M1) for connecting an external device (MS) to a television device (TV), which television device has a first input (SC3) to receive a certain external information signal in certain first format and which external device is usable over a distance from the coupling device, wherein the coupling device comprises:
radio communicating means (BB2) for receiving information from the external device (MS);
means (AD,CPU,GG,41,42) for converting received information to an information signal in a first format; and
a first output (SC1) for supplying said information signal in the first format to the first input (SC3) of said television device, wherein the first output is independent of the make and model of the television device;
**characterised in that**
the radio communicating means being adapted to receive image and/or audio signals in the information signal from the external device over an open Low Power Radio Frequency (LPRF) standard independently of the make and model of the external device, and the coupling device comprises:
means for controlling the coupling device with the LPRF connection using the external device;
means for providing the television device with respective audio and/or video signal in the first format over the first output using a SCART connector, so as to provide the television device as an additional display and/or speaker for the external device, when the coupling device is connected to the television device and to the external device.

2. A coupling device according to claim 1, **characterised in that**
the coupling device comprises a second input (SC2) for receiving an external picture signal to be relayed to the television device through said first output when the television device is not required to present or store information provided by the external device (MS).

3. A coupling device according to claim 1 or 2, **characterised in that**
the coupling device comprises an audio decoder (AD) for decoding audio signal from the information received from the external device (MS) over LPRF.

4. A coupling device according to claim 2, or claims 2 and 3, **characterised in that**
said coupling device comprises switching means (SS,VS) to disconnect a signal entering said second input from said first output when the coupling device is communicating with said external device and to connect the signal entering the second input to said first output when the coupling device is not communicating with said external device.

5. A coupling device according to any of claims 1 to 4, **characterised in that**
said external device is battery operated, and
said coupling device comprises means (PS,CHC) for charging a battery of said external device.

6. A coupling device according to any of claims 1 to 5, **characterised in that** the coupling device comprises
means (VIDEO2,VS,TT,CPU) for receiving a second information from a television program source; and
means (BB2) to send said second information through a short range radio connection (RFC) to said external device.

7. A coupling device according to any of claims 1 to 6, **characterised in that** by coupling said first output to said first input said coupling device is joinable by a releasably fastenable friction joint to the television device.

8. A coupling device according to any of claims 1 to 7, **characterised in** the coupling device comprises a central processing unit (CPU) adapted to control the operation of the coupling device.

9. A coupling device according to any of claims 1 to 8, **characterised in that** the coupling device is arranged to receive its operating voltage from an external device battery connected to the coupling device.

10. A coupling device according to any of claims 1 to 9, **characterised in that** the coupling device comprises means for controlling the coupling device, including switching on and off the coupling device, with the LPRF connection using the external device.

11. A coupling device according to any of claims 1 to 10, **characterised by** the radio communicating means (BB2) comprising an integrated antenna for receiving information from the external device.

12. A system comprising an external device (MS), a television device (TV), and a coupling device (M1),
the television device comprises a first input (SC3) that is independent of the make and model of the television device for receiving an external information signal of a first format;
the external device (MS) has a radio transmitter (BB1) for transmitting an information signal of a second format;
the coupling device (M1) comprises;
radio communicating means (BB2) for receiving the information signal of the second format form the external device over a distance;
means (AD,CPU,GG,41,42) for converting received information of the second format into an information signal of the first format; and
a first output (SC1) for supplying said information signal in the first format to the first input (SC3) of said television device wherein the first output is independent of the make and model of the television device; **characterised in that**
the radio communicating means being adapted to receive image and/or audio signals in the information signal from the external device over an open Low Power Radio Frequency (LPRF) standard independently of the make and model of the external device, and the coupling device comprises:
means for controlling the coupling device with the LPRF connection using the external device;
means for providing the television device with respective audio and/or video signal in the first format over the first output using a SCART connector, so as to provide the television device as an additional display and/or speaker for the external device, when the coupling device is connected to the television device and to the external device.

13. A system according claim 12, **characterised in that** the coupling device is a coupling device defined by any one of claims 2 to 11..

14. A method for coupling an external device (MS) to a television device (TV) with a coupling device comprising a first output (SC1) wherein the first output is independent of the make and model of the television device, which television device contains a first input (SC3) independent of the make and model of the television device and capable of receiving an external information signal for presentation by the television device, in a system further comprising a coupling device (M1) connectable to the first input (SC3) of the television device, comprising:
receiving by radio communicating means (BB2) information from the external device over a distance from the coopling device
converting the received information to a format suitable to an input of the television device; and
supplying the converted information to said first input for presentation by the television device (TV);
**characterised in that** the method further comprises:
receiving image and/or audio signals in the information signal from the external device over an open Low Power Radio Frequency (LPRF) standard independently of the make and model of the external device, and
controlling the coupling device with the LPRF connection using the external device;
providing the television device with respective audio and/or video signal in the first format over the first output using a SCART connector, so as to provide the television device as an additional display and/or speaker for the external device, when the coupling device is connected to the television device and to the external device.

## Patentansprüche

1. Kopplungsvorrichtung (M1) zum Verbinden einer externen Vorrichtung (MS) mit einem Fernsehgerät (TV), wobei das Fernsehgerät einen ersten Eingang (SC3) aufweist, um ein bestimmtes externes Informationssignal in einem bestimmten ersten Format zu empfangen, und wobei die externe Vorrichtung über eine Entfernung von der Kopplungsvorrichtung hinweg benutzbar ist, wobei die Kopplungsvorrichtung umfasst:
Funkkommunikationsmittel (BB2) zum Empfangen von Informationen von der externen Vorrichtung (MS);
Mittel (AD, CPU, GG, 41, 42) zum Umwandeln von empfangenen Informationen in ein Informationssignal in einem ersten Format; und
einen ersten Ausgang (SC1) zum Zuführen des Informationssignals in dem ersten Format an den ersten Eingang (SC3) des Fernsehgeräts, wobei der erste Ausgang unabhängig von Fabrikat und Modell des Fernsehgeräts ist;
**dadurch gekennzeichnet, dass**
die Funkkommunikationsmittel angepasst sind, um Bild- und/oder Audiosignale in dem Informationssignal von der externen Vorrichtung über einen offenen Niedrigleistungsfunkfrequenz (LPRF)-Standard zu empfangen, unabhängig von Fabrikat und Modell der externen Vorrichtung, und dass die Kopplungsvorrichtung umfasst:
Mittel zum Steuern der Kopplungsvorrichtung mit der LPRF-Verbindung unter Verwendung der externen Vorrichtung; und
Mittel, um dem Fernsehgerät entsprechende Audio- und/oder Videosignale in dem ersten Format über den ersten Ausgang unter Verwendung eines SCART-Steckers bereitzustellen, um das Fernsehgerät als eine zusätzliche Anzeige und/oder einen zusätzlichen Lautsprecher für die externe Vorrichtung bereitzustellen, wenn die Kopplungsvorrichtung mit dem Fernsehgerät und der externen Vorrichtung verbunden ist.

2. Kopplungsvorrichtung nach Anspruch 1, **dadurch gekennzeichnet, dass**
die Kopplungsvorrichtung einen zweiten Eingang (SC2) zum Empfangen eines externen Bildsignals umfasst, welches an das Fernsehgerät über den ersten Ausgang weitergeleitet werden soll, wenn das Fernsehgerät nicht Informationen, die von der externen Vorrichtung (MS) bereitgestellt werden, darstellen oder speichern muss.

3. Kopplungsvorrichtung nach Anspruch 1 oder 2, **dadurch gekennzeichnet, dass** die Kopplungsvorrichtung einen Audiodecoder (AD) umfasst, um ein Audiosignal aus den von der externen Vorrichtung (MS) über LPRF empfangenen Informationen zu dekodieren.

4. Kopplungsvorrichtung nach Anspruch 2 oder nach Ansprüchen 2 und 3, **dadurch gekennzeichnet, dass**
die Kopplungsvorrichtung Schaltmittel (SS, VS) umfasst, um ein Signal zu trennen, welches aus dem ersten Ausgang in den zweiten Eingang eingeht, wenn die Kopplungsvorrichtung mit der externen Vorrichtung kommuniziert, und um das Signal zu verbinden, welches aus dem ersten Ausgang in den zweiten Eingang eingeht, wenn die Kopplungsvorrichtung nicht mit der externen Vorrichtung kommuniziert.

5. Kopplungsvorrichtung nach irgendeinem der Ansprüche 1 bis 4, **dadurch gekennzeichnet, dass** die externe Vorrichtung batteriebetrieben ist, und
die Kopplungsvorrichtung Mittel (PS, CHC) umfasst, um eine Batterie der externen Vorrichtung aufzuladen.

6. Kopplungsvorrichtung nach irgendeinem der Ansprüche 1 bis 5, **dadurch gekennzeichnet, dass** die Kopplungsvorrichtung umfasst:
Mittel (VIDEO2, VS, TT, CPU) zum Empfangen einer zweiten Information von einer Fernsehprogrammquelle; und
Mittel (BB2) zum Senden der zweiten Information über eine Kurzstreckenfunkverbindung (RFC) an die externe Vorrichtung.

7. Kopplungsvorrichtung nach irgendeinem der Ansprüche 1 bis 6, **dadurch gekennzeichnet, dass** die Kopplungsvorrichtung durch Koppeln des ersten Ausgangs mit dem ersten Eingang mittels einer lösbar befestigbaren kraftschlüssigen Verbindung mit dem Fernsehgerät verbindbar ist.

8. Kopplungsvorrichtung nach irgendeinem der Ansprüche 1 bis 7, **dadurch gekennzeichnet, dass** die Kopplungsvorrichtung eine zentrale Verarbeitungseinheit (CPU) umfasst, die angepasst ist, um den Betrieb der Kopplungsvorrichtung zu steuern.

9. Kopplungsvorrichtung nach irgendeinem der Ansprüche 1 bis 8, **dadurch gekennzeichnet, dass** die Kopplungsvorrichtung eingerichtet ist, ihre Betriebsspannung von einer Batterie einer externen Vorrichtung zu erhalten, die mit der Kopplungsvorrichtung verbunden ist.

10. Kopplungsvorrichtung nach irgendeinem der Ansprüche 1 bis 9, **dadurch gekennzeichnet, dass** die Kopplungsvorrichtung Mittel umfasst, um die Kopplungsvorrichtung zu steuern, einschließlich einem Ein- und Ausschalten der Kopplungsvorrichtung, mit der LPRF-Verbindung unter Verwendung der externen Vorrichtung.

11. Kopplungsvorrichtung nach irgendeinem der Ansprüche 1 bis 10, **dadurch gekennzeichnet, dass** die Funkkommunikationsmittel (BB2) eine integrierte Antenne zum Empfangen von Informationen von der externen Vorrichtung umfassen.

12. System, umfassend eine externe Vorrichtung (MS), ein Fernsehgerät (TV), und eine Kopplungsvorrichtung (M1),
wobei das Fernsehgerät einen ersten Eingang (SC3) aufweist, der unabhängig von Fabrikat und Modell des Fernsehgeräts ist, um ein externes Informationssignal in einem ersten Format zu empfangen;
wobei die externe Vorrichtung (MS) einen Funksender (BB1) umfasst, um ein Informationssignal in einem zweiten Format zu senden;
wobei die Kopplungsvorrichtung (M1) umfasst:
Funkkommunikationsmittel (BB2) zum Empfangen des Informationssignals in dem zweiten Format von der externen Vorrichtung über eine Entfernung hinweg;
Mittel (AD, CPU, GG, 41, 42) zum Umwandeln von empfangenen Informationen in dem zweiten Format in ein Informationssignal in dem ersten Format; und
einen ersten Ausgang (SC1) zum Zuführen des Informationssignals in dem ersten Format an den ersten Eingang (SC3) des Fernsehgeräts, wobei der erste Ausgang unabhängig von Fabrikat und Modell der Fernsehvorrichtung ist;
**dadurch gekennzeichnet, dass**
die Funkkommunikationsmittel (BB2) angepasst sind, Bild- und/oder Audiosignale in dem Informationssignal von der externen Vorrichtung über einen offenen Niedrigleistungs-Funkfrequenz-(LPRF)-Standard zu empfangen, unabhängig von Fabrikat und Modell der externen Vorrichtung, und die Kopplungsvorrichtung umfasst:
Mittel zum Steuern der Kopplungsvorrichtung mit der LPRF-Verbindung unter Verwendung der externen Vorrichtung;
Mittel zum Bereitstellen eines jeweiligen Audio- und/oder Videosignals in dem ersten Format an das Fernsehgerät über den ersten Ausgang unter Verwendung eines SCART-Steckers, um das Fernsehgerät als eine zusätzliche Anzeige und/oder einen zusätzlichen Lautsprecher für die externe Vorrichtung bereitzustellen, wenn die Kopplungsvorrichtung mit dem Fernsehgerät und der externen Vorrichtung verbunden ist.

13. System nach Anspruch 12, **dadurch gekennzeichnet, dass** die Kopplungsvorrichtung eine nach irgendeinem der Ansprüche 2 bis 11 definierte Kopplungsvorrichtung ist.

14. Verfahren zum Koppeln einer externen Vorrichtung (MS) mit einem Fernsehgerät (TV) mittels einer Kopplungsvorrichtung (M1), welche einen ersten Ausgang (SC1) umfasst, wobei der erste Ausgang unabhängig von Fabrikat und Modell des Fernsehgeräts ist, wobei das Fernsehgerät einen ersten Eingang (SC3) enthält, der unabhängig von Fabrikat und Modell des Fernsehgeräts ist und fähig ist, ein externes Informationssignal zur Darstellung durch das Fernsehgerät zu empfangen, wodurch die Kopplungsvorrichtung (M1) mit dem ersten Eingang (SC3) des Fernsehgeräts verbindbar ist, umfassend:
Empfangen von Informationen von der externen Vorrichtung über eine Entfernung von der Kopplungsvorrichtung hinweg durch Funkkommunikationsmittel (BB2);
Umwandeln der empfangenen Informationen in ein Format, das für einen Eingang des Fernsehgeräts geeignet ist; und
Zuführen der umgewandelten Informationen an den ersten Eingang zur Darstellung durch das Fernsehgerät (TV), wobei der erste Ausgang unabhängig von Fabrikat und Modell des Fernsehgeräts ist;
**dadurch gekennzeichnet, dass** das Verfahren weiter umfasst:
Empfangen von Bild- und/oder Audiosignalen in dem Informationssignal von der externen Vorrichtung über einen offenen Niedrigleistungsfunkfrequenz(LPRF)-Standard, unabhängig von Fabrikat und Modell der externen Vorrichtung, und
Steuern der Kopplungsvorrichtung mit der LPRF-Verbindung unter Verwendung der externen Vorrichtung;
Bereitstellen eines entsprechenden Audio- und/oder Videosignals in dem ersten Format an das Fernsehgerät über den ersten Ausgang unter Verwendung eines SCART-Steckers, um das Fernsehgerät als eine zusätzliche Anzeige und/oder einen zusätzlichen Lautsprecher für die externe Vorrichtung bereitzustellen, wenn die Kopplungsvorrichtung mit dem Fernsehgerät und der externen Vorrichtung verbunden ist.

## Revendications

1. Dispositif de couplage (M1) pour relier un dispositif externe (SM) à un dispositif de télévision (TV), lequel dispositif de télévision a une première entrée (SC3) pour recevoir un certain signal d'information externe dans un certain premier format et lequel dispositif externe est utilisable sur une distance depuis le dispositif de couplage, dans lequel le dispositif de couplage comprend :
un moyen de radiocommunication (BB2) pour recevoir les informations provenant du dispositif externe (SM) ;
un moyen (AN, UC, GG, 41, 42) pour convertir les informations reçues en un signal d'information dans un premier format ; et
une première sortie (SC1) pour fournir ledit signal d'information dans le premier format à la première entrée (SC3) dudit dispositif de télévision, dans lequel la première sortie est indépendante de la marque et du modèle du dispositif de télévision ;
**caractérisé en ce que**
le moyen de radiocommunication étant adapté pour recevoir les signaux d'image et/ou audio dans le signal d'information provenant du dispositif externe sur un standard ouvert avec une Fréquence Radio à Faible Puissance (FRFP) de manière indépendante de la marque et du modèle du dispositif externe, et le dispositif de couplage comprend :
un moyen pour commander le dispositif de couplage avec la connexion avec une FRFP en utilisant le dispositif externe ; et
un moyen pour transmettre au dispositif de télévision le signal audio et/ou vidéo respectif dans le premier format sur la première sortie en utilisant un connecteur Péritel® de sorte à prévoir le dispositif de télévision comme étant un écran et/ou un haut-parleur supplémentaire(s) du dispositif externe lorsque le dispositif de couplage est raccordé au dispositif de télévision et au dispositif externe.

2. Dispositif de couplage selon la revendication 1, **caractérisé en ce que**
le dispositif de couplage comprend une seconde entrée (SC2) pour recevoir un signal vidéo externe qui doit être relayé au dispositif de télévision à travers ladite première sortie lorsqu'on ne demande pas que le dispositif de télévision présente ou stocke les informations fournies par le dispositif externe (SM).

3. Dispositif de couplage selon la revendication 1 ou 2, **caractérisé en ce que**
le dispositif de couplage comprend un décodeur audio (DA) pour décoder le signal audio provenant des informations reçues du dispositif externe (SM) sur la FRFP.

4. Dispositif de couplage selon la revendication 2 ou les revendications 2 et 3, **caractérisé en ce que**
ledit dispositif de couplage comprend un moyen de commutation (SS, VS) pour déconnecter un signal entrant dans ladite seconde entrée provenant de ladite première sortie lorsque le dispositif de couplage est en train de communiquer avec ledit dispositif externe et pour connecter le signal entrant dans la seconde entrée à ladite première sortie lorsque le dispositif de couplage n'est pas en train de communiquer avec ledit dispositif externe.

5. Dispositif de couplage selon l'une quelconque des revendications 1 à 4, **caractérisé en ce que** :
ledit dispositif externe est alimenté par batterie, et
ledit dispositif de couplage comprend un moyen (PS, CHC) pour charger une batterie dudit dispositif externe.

6. Dispositif de couplage selon l'une quelconque des revendications 1 à 5, **caractérisé en ce que** le dispositif de couplage comprend :
un moyen (VIDEO2, VS, TT, UC) pour recevoir une seconde information provenant d'une source de programme de télévision ; et
un moyen (BB2) pour envoyer ladite seconde information à travers une connexion radio de courte portée (CRF) audit dispositif externe.

7. Dispositif de couplage selon l'une quelconque des revendications 1 à 6, **caractérisé en ce qu'**en couplant ladite première sortie à ladite première entrée, ledit dispositif externe peut être, de manière détachable, relié par un raccord à friction qui peut être fixé de manière détachable au dispositif de télévision.

8. Dispositif de couplage selon l'une quelconque des revendications 1 à 7, **caractérisé en ce que** le dispositif de couplage comprend une unité de traitement centrale (UTC) adaptée pour commander le fonctionnement du dispositif de couplage.

9. Dispositif de couplage selon l'une quelconque des revendications 1 à 8, **caractérisé en ce que** le dispositif de couplage est arrangé pour recevoir sa tension de fonctionnement d'une batterie du dispositif externe raccordée au dispositif.

10. Dispositif de couplage selon l'une quelconque des revendications 1 à 9, **caractérisé en ce que** le dispositif de couplage comprend un moyen pour commander le dispositif de couplage, incluant la mise en marche et la mise hors tension du dispositif de couplage, avec la connexion avec une FRFP en utilisant le dispositif externe.

11. Dispositif de couplage selon l'une quelconque des revendications 1 à 10, **caractérisé par** le moyen de radiocommunication (BB2) comprenant une antenne intégrée pour recevoir les informations provenant du dispositif externe.

12. Système comprenant un dispositif externe (MS), un dispositif de télévision (TV) et un dispositif de couplage (M1),
le dispositif de télévision comprend une première entrée (SC3) qui est indépendante de la marque et du modèle du dispositif de télévision pour recevoir un signal d'information externe selon un premier format ;
le dispositif externe (SM) a un radioémetteur (BB1) pour émettre un signal d'information selon un second format ;
le dispositif de couplage (M1) comprend :
un moyen de radiocommunication (BB2) pour recevoir le signal d'information selon un second format provenant du dispositif externe sur une distance ;
un moyen (AN, UC, GG, 41, 42) pour convertir les informations reçues dans le second format en un signal d'information dans le premier format ; et
une première sortie (SC1) pour fournir ledit signal d'information dans le premier format à la première entrée (SC3) dudit dispositif de télévision, dans lequel la première sortie est indépendante de la marque et du modèle du dispositif de télévision ;
**caractérisé en ce que**
le moyen de radiocommunication (BB2) étant adapté pour recevoir les signaux vidéo et/ou audio dans le signal d'information provenant du dispositif externe sur un standard ouvert avec une Fréquence Radio à Faible Puissance (FRFP) de manière indépendante de la marque et du modèle du dispositif externe, et le dispositif de couplage comprend :
un moyen pour commander le dispositif de couplage avec la connexion avec une FRFP en utilisant le dispositif externe ; et
un moyen pour transmettre au dispositif de télévision le signal audio et/ou vidéo respectif dans le premier format sur la première sortie en utilisant un connecteur Péritel® de sorte à prévoir le dispositif de télévision comme étant un écran et/ou un haut-parleur supplémentaire(s) pour le dispositif externe lorsque le dispositif de couplage est raccordé au dispositif de télévision et au dispositif externe.

13. Système selon la revendication 12, **caractérisé en ce que** le dispositif de couplage est un dispositif de couplage défini par l'une quelconque des revendications 2 à 11.

14. Procédé pour coupler un dispositif externe (MS) à un dispositif de télévision (TV), avec un dispositif de couplage (M1) comprenant une première sortie (SC1), dans lequel la première sortie est indépendante de la marque et du modèle du dispositif de télévision, lequel dispositif de télévision contient une première entrée (SC3) indépendante de la marque et du modèle du dispositif de télévision et capable de recevoir un signai d'information externe pour une présentation par le dispositif de télévision de sorte que le dispositif de couplage (M1) peut être raccordé à la première entrée (SC3) du dispositif de télévision, comprenant les étapes consistant à :
recevoir par le moyen de radiocommunication (BB2) les informations provenant du dispositif externe sur une distance depuis le dispositif de couplage ;
convertir les informations reçues en un format approprié pour une entrée du dispositif de télévision ; et
fournir les informations converties à ladite première entrée pour une présentation par le dispositif de télévision (TV), dans lequel la première sortie est indépendante de la marque et du modèle du dispositif de télévision ;
**caractérisé en ce que** le procédé comprend en outre les étapes consistant à :
recevoir les signaux vidéo et/ou audio dans le signal d'information provenant du dispositif externe sur un standard ouvert avec une Fréquence Radio à Faible Puissance (FRFP) de manière indépendante de la marque et du modèle du dispositif externe, et
commander le dispositif de couplage avec la connexion avec une FRFP en utilisant le dispositif externe ; et
transmettre au dispositif de télévision le signal audio et/ou vidéo respectif dans le premier format sur la première sortie en utilisant un connecteur Peritel® de sorte à prévoir le dispositif de télévision comme étant un écran et/ou un haut-parleur supplémentaire(s) du dispositif externe lorsque le dispositif de couplage est raccordé au dispositif de télévision et au dispositif externe.
